(19) Europäisches Patentamt / European Patent Office / Office européen des brevets

(11) **EP 1 646 969 B1**

(12) **EUROPÄISCHE PATENTSCHRIFT**

(45) Veröffentlichungstag und Bekanntmachung des Hinweises auf die Patenterteilung:
**22.08.2007   Patentblatt 2007/34**

(21) Anmeldenummer: **04741097.2**

(22) Anmeldetag: **16.07.2004**

(51) Int Cl.:
*G06K 19/067* $^{(2006.01)}$      *G06K 19/07* $^{(2006.01)}$

(86) Internationale Anmeldenummer:
**PCT/EP2004/007970**

(87) Internationale Veröffentlichungsnummer:
**WO 2005/010809 (03.02.2005 Gazette 2005/05)**

(54) **SICHERHEITSELEMENT ZUR RF-IDENTIFIKATION**

SECURITY ELEMENT FOR RADIO FREQUENCY IDENTIFICATION

ELEMENT DE SECURITE POUR L'IDENTIFICATION PAR RADIOFREQUENCE

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.07.2003   DE 10333704**

(43) Veröffentlichungstag der Anmeldung:
**19.04.2006   Patentblatt 2006/16**

(73) Patentinhaber: **OVD Kinegram AG**
**6301 Zug (CH)**

(72) Erfinder:
- **LUTZ, Norbert**
  **90607 Rückersdorf (DE)**
- **PETERS, John, Anthony**
  **CH-8804 Au (CH)**

(74) Vertreter: **Zinsinger, Norbert**
**Louis Pöhlau Lohrentz,**
**P.O. Box 30 55**
**90014 Nürnberg (DE)**

(56) Entgegenhaltungen:
**WO-A-97/21184          DE-A- 10 118 487**

**Beschreibung**

Die Erfindung betrifft ein Sicherheitselement zur RF-Identifikation, das eine flexible, elektrisch nicht leitende Substratschicht und eine auf die Substratschicht aufgebrachte erste leitfähige Schicht aus einem elektrisch leitenden Material aufweist, die in einem ersten Flächenbereich der Substratschicht musterförmig zur Bildung eines RF-Bauteils ausgeformt ist. Die Erfindung betrifft weiter ein Verfahren zum Erzeugen eines derartigen Sicherheitselementes.

US 4,220,956 beschreibt eine RF-Identifikationsschaltung (RF = Radio Frequency), die eine Reihe von Antennen besitzt, die mittels eines Ätzprozesses aus einem Kupferlaminat gefertigt sind. Das Kupferlaminat ist auf einem Dielektrikum aufgebracht. Da das Dielektrikum keine elektrischen Funktionen erbringt, kann es sehr dünn ausgeformt werden, wodurch sich die mechanische Flexibilität der RF-Identifikationsschaltung erhöht.

US 5,528,222 beschreibt eine RF-Identifikationsschaltung, die einen von einer Basisstation gesendeten RF-Träger zurück zur Basisstation reflektiert und hierbei dem reflektierten Signal eine zusätzliche Information gemäß eines vorprogrammierten Informationsprotokolls aufmoduliert. Die RF-Identifikationsschaltung weist eine Halbleiterschaltung mit einem Speicher und ein oder mehrere RF-Bauteile einer RF-Schaltung auf. Die Halbleiterschaltung ist auf einem Substrat montiert. Das von der Antenne empfangene RF-Signal wird an die Halbleiterschaltung weitergeleitet. Bei dem Substrat handelt es sich um ein flexibles, nicht leitendes Substrat. Die Antenne ist ein integraler Bestandteil des Substrates. Sie besteht aus einer 25 bis 35 µm dicken Kupferbahn, die auf einer Polyester- oder Polyamid-Schicht aufgebracht ist.

Aufgrund dieses Aufbaus hat die RF-Identifikationsschaltung eine sehr dünne und mechanisch flexible Form, so daß sie sich gut als Sicherheitselement für Kreditkarten und Pässe eignet.

WO-A-97/21184 offenbart ein Sicherheitselement mit einer Antenne auf einem flexiblen Substrat. Die elektrisch leitfähige Schicht der Antenne hat eine rillenförmige Reliefstruktur (siehe Präambel des Anspruchs 1).

Der Erfindung liegt nun die Aufgabe zugrunde, ein verbessertes Sicherheitselement zur RF-Identifikation bereitzustellen.

Diese Aufgabe wird von einem Sicherheitselement zur RF-Identifikation gemäß Anspruch 1 und einem Verfahren zum Erzeugen eines Sicherheitselements zur RF-Identifikation gemäß Anspruch 16 gelöst.

Durch die Erfindung wird der Vorteil erreicht, daß die mechanische Flexibilität von Sicherheitselementen zur RF-Identifikation weiter erhöht werden kann und daß die Produktionskosten gesenkt werden. So ist es durch die Erfindung zum einen möglich, die Dicke der elektrisch leitfähigen Schicht zu reduzieren und gleichzeitig die Güte der RF-Bauteile des Sicherheitselements konstant zu halten. Umgekehrt ist es möglich, bei konstanter Abmessung und Dicke der RF-Bauteile die Güte der RF-Bauteile und damit die elektrischen Eigenschaften des Sicherheitselements zu verbessern.

Unter RF-Identifikation (RF-ID = Radio Frequency-Identification) ist allgemein eine kontaktlose RF-Kommunikation zwischen einem Transponder, der einem Gegenstand oder einer Person zugeordnet ist, und einer Lesevorrichtung zu verstehen. Der Transponder weist hierbei beispielsweise eine Antenne auf, die Teil eines Resonanzschaltkreises ist und/ oder mit einem Halbleiterchip verbunden ist. Unter RF-Bauteilen sind Bauteile zur Verarbeitung von RF Signalen, beispielsweise Antennen, Spulen oder Kondensatoren zu verstehen.

Vorteilhafte Ausgestaltungen der Erfindung sind in den Unteransprüchen bezeichnet.

Gemäß eines bevorzugten Ausführungsbeispiels der Erfindung ist im ersten Flächenbereich die leitfähige Schicht in Form einer RF-Antenne oder -Spule ausgeformt, wobei in dem der RF-Antenne bzw. der -Spule zugeordneten Bereich der leitfähigen Schicht die Rillen der Reliefstruktur im Mittel mehr längs zur Flussrichtung des elektrischen Stromes als quer zur Flussrichtung des elektrischen Stromes orientiert sind. Hierdurch wird der Qualitätsfaktor Q, der durch

$$Q = R \cdot \left( \frac{C}{L} \right)^{1/2}$$

mit R = ohmscher Widerstand der Schaltung, C = Kapazität, L = Gesamtinduktivität der Antenne, definiert ist, verbessert. Durch eine derartige Reliefstruktur wird zum einen die effektive Breite der die RF-Antenne bzw. -Spule bildenden Leiterbahnen vergrößert, wodurch der Widerstand der Leiterbahnen bei konstanter Dicke der leitfähigen Schicht reduziert wird, zum anderen wirkt sich die hierdurch erzielte Vergrößerung der Oberfläche der leitfähigen Schicht in dem Bereich der RF-Antenne bzw. -Spule auf den Skin-Effekt aus, wodurch sich eine weitere Reduktion des Wirkwiderstandes der RF-Antenne bzw. -Spule ergibt. Hierdurch ist es dann möglich, die elektrisch leitfähige Schicht dünner auszuformen und hierbei die Güte der Antenne bzw. Spule konstant zu halten. Hierdurch werden die Herstellungskosten verringert und es wird ermöglicht, Sicherheitselemente mit hoher mechanischer Flexibilität herzustellen. Alternativ ist es möglich, die Dicke der elektrisch leitfähigen Schicht konstant zu halten und die Breite der die RF-Antenne bzw. -Spule bildenden Leiterbahnen zu reduzieren, wodurch sich die Packungsdichte erhöhen lässt.

Hierbei ist es besonders vorteilhaft, die Rillen der Reliefstruktur in dem der RF-Antenne bzw. -Spule zugeordneten Bereich der leitfähigen Schicht längs der Flussrichtung des elektrischen Stromes zu orientieren. Hierdurch wird eine besonders hohe Reduzierung des ohmschen Widerstandes erzielt.

Zweckmäßigerweise wird hierbei die erste elektrisch leitfähige Schicht in dem ersten Bereich in Form einer oder mehrerer Leiterbahnen mit einer Breite von 5 μm bis 10 mm, vorzugsweise im Bereich von 100 μm, ausgeformt.

Gemäß eines weiteren bevorzugten Ausführungsbeispiels der Erfindung weist das Sicherheitselement eine zweite elektrisch leitfähige Schicht auf, wobei die erste und die zweite elektrisch leitfähige Schicht im ersten Flächenbereich ein kapazitives Element bilden. Durch die Reliefstruktur wird hier nun die Oberfläche der elektrisch leitfähigen Schicht im ersten Flächenbereich erhöht, wodurch sich die Ladungsdichte im ersten Flächenbereich erhöht. Hierdurch erhöht sich dann auch die Kapazität des kapazitiven Elements, das im ersten Flächenbereich bereitgestellt wird. Dieser Effekt kann dazu verwendet werden, den für das kapazitive Element vorgesehenen Flächenbereich zu reduzieren oder mittels der Reliefstruktur eine Feinabstimmung der Resonanzfrequenz eines Schwingkreises zu bewirken. Damit ist es möglich, die Packungsdichte des Sicherheitselements zu erhöhen, Produktionskosten zu senken und die elektrischen Eigenschaften des Sicherheitselements zu verbessern.

Besonders vorteilhaft ist es hier, im Bereich des kapazitiven Elementes eine erste Reliefstruktur vorzusehen, die von einer Reliefstruktur mit einer Vielzahl von sich kreuzenden Rillen gebildet wird. Hierdurch ist es möglich, eine besonders hohe fraktale Komponente und damit eine besonders hohe Ladungsdichte zu erzielen. Dies ist auch dadurch erzielbar, daß in dem dem kapazitiven Element zugeordneten Flächenbereich in der zweiten leitfähigen Schicht zumindest bereichsweise eine zweite Reliefstruktur abgeformt ist.

Es hat sich gezeigt, daß die Verwendung von Reliefstrukturen mit einer Profiltiefe im Bereich von 50 nm bis 10 μm und einer Spatialfrequenz von 100 bis 2000 Linien pro mm besonders geeignet sind. Weiter hat es sich als vorteilhaft gezeigt, die erste elektrisch leitfähige Schicht in einer Dicke von 50 nm bis 50 μm, bevorzugt etwa 500 nm, auszuführen. Bei einer derartigen Kombination von Relieftiefe, Spatialfrequenz und Schichtdicke der elektrisch leitfähigen Schicht sind die durch die Erfindung erzielten, oben geschilderten Vorteile besonders hoch.

Es hat sich weiter als zweckmäßig gezeigt, die erste elektrisch leitfähige Schicht mittels Aufdampfen einer Teilschicht auf die Substratschicht aufzubringen. Die Metallschicht kann hierbei durch die Verwendung von Bedampfungsmasken bereits partiell musterförmig zur Bildung des RF-Bauteils im ersten Flächenbereich aufgedampft werden. Weiter ist es möglich, daß zuerst eine vollflächige Bedampfung erfolgt und sodann der erste Flächenbereich partiell musterförmig zur Bildung des RF-Bauteils demetallisiert wird. Hierdurch ergeben sich produktionstechnische Vorteile bei der Herstellung der ersten leitfähigen Schicht, insbesondere in dem oben geschilderten Schichtdickebereich.

Es ist zweckmäßig, daß die Substratschicht eine Replizierschicht aufweist und die erste Reliefstruktur in die der ersten leitfähigen Schicht zugewandten Oberfläche der Replizierschicht abgeformt ist. Damit ist die Reliefstruktur sowohl in der Oberfläche der Replizierschicht als auch in der ersten leitfähigen Schicht abgeformt, so daß die Substratschicht die Reliefform der ersten leitfähigen Schicht stützt.

Als Reliefstruktur ist bevorzugt eine sägezahnförmige Reliefstruktur, beispielsweise ein Blaze-Gitter, zu verwenden. Eine derartige Profilform stellt einen gelungenen Kompromiss zwischen einer hohen fraktalen Komponente (effektive Breite zu projizierter Breite) und der Möglichkeit dar, durch übliche und erprobte Beschichtungsverfahren eine erste leitfähige Schicht konstanter Dicke zu erzielen. Weiter hat sich die Verwendung von Reliefstrukturen als vorteilhaft erwiesen, die aus der Überlagerung einer Grobstruktur und einer Feinstruktur gebildet werden.

Gemäß eines weiteren bevorzugten Ausführungsbeispiels der Erfindung dient die Reliefstruktur nicht nur zur Verbesserung der elektrischen Eigenschaften von RF-Bauteilen, sondern dient zusätzlich der Erzeugung von optischen Sicherheitsmerkmalen. Die Reliefstruktur weist so beispielsweise diffraktive Bereiche auf, die bei Lichteinfall beugungsoptische Effekte erzielen, die als weiteres Sicherheitsmerkmal dienen.

Besonders vorteilhaft ist es weiter, wenn das Sicherheitselement ein Folienelement darstellt, insbesondere eine Prägefolie, eine Laminierfolie, eine Stickerfolie oder ein Teileelement einer Übertragungslage einer derartigen Folie ist. Das Sicherheitselement lässt sich damit besonders kostengünstig produzieren. Weiter ergeben sich große Vorteile bei der späteren Anwendung: Das optische Sicherheitselement kann damit beispielsweise besonders einfach und kostengünstig auf Sicherheitsdokumente, wie Reisepässe, Führerscheine, Eintrittskarten, Kreditkarten, Fahrkarten für Transportsysteme oder Software-Lizenzen, aufgebracht werden. Dies gilt ebenso für das Aufbringen des Sicherheitselements auf Produkte, beispielsweise zur Warensicherung, zur Warenverfolgung oder zur Waren-Authentifizierung. Weiter ist es möglich, das Sicherheitselement besonders dünn und flexibel aufzubauen.

Zweckmäßigerweise weist das Sicherheitselement eine Resonatorschaltung zur RF-Identifikation und/oder einen Chip auf. Bei der Ausführung als Folienelement ist es hierbei auch möglich, den Chip in das Folienelement zu implementieren oder die elektrische Logik des Chips in ein oder mehreren Schichten des Folienelements zu implementieren. Die Abstimmbarkeit des Sicherheitselementes wird weiter dadurch erhöht, daß in der ersten leitfähigen Schicht aus einem elektrisch leitenden Material zwei oder mehr mit Verbindungsbahnen verbundene kapazitiven Teil-Elemente ausgeformt werden. Bei der Feinabstimmung der Resonanzfrequenz des Sicherheitselements werden dann ein oder mehrere dieser Verbindungsbahnen zu kapazitiven Teilelementen beispielsweise mittels eines Laserstrahls durchtrennt. Dadurch kann das Sicherheitselement beispielsweise in einem Individualisierungs- oder Personalisierungsschritt auf eine individuelle Resonanzfrequenz abgestimmt werden, so daß ein flexibler Einsatz ermöglicht und Produktionskosten gesenkt werden.

Im folgenden wird die Erfindung anhand von mehreren Ausführungsbeispielen unter Zuhilfenahme der beiliegenden Zeichnungen beispielhaft erläutert.

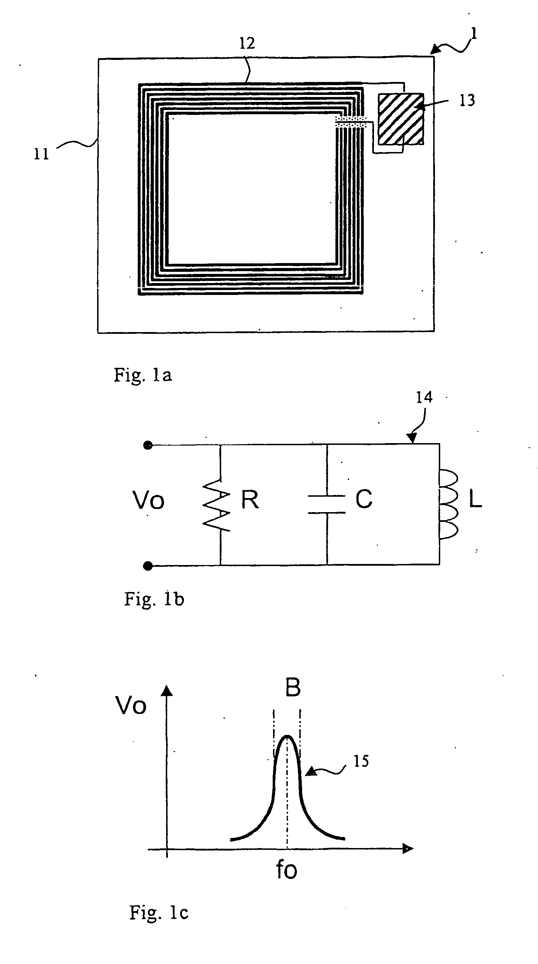

Fig. 1 a  zeigt eine schematische Darstellung eines erfindungsgemäßen Sicherheitselements zur RF-Identifikation.

Fig. 1 b  zeigt ein Ersatzschaltbild des Sicherheitselementes nach Fig. 1 a.

Fig. 1 c  zeigt ein Funktionsdiagramm zur Verdeutlichung der Funktionsweise des Sicherheitselementes nach Fig. 1a.

Fig. 2a  zeigt eine schematische Darstellung eines erfindungsgemäßen Sicherheitselementes zur RF-Identifikation.

Fig. 2b und Fig. 2c  zeigen schematische Darstellungen von Teilbereichen des Sicherheitselementes nach Fig. 2a.

Fig. 3, bis Fig. 5  zeigen schematische Darstellungen zur Verdeutlichung alternativer Ausführungsformen des Sicherheitselementes nach Fig. 2a.

Fig. 6a bis Fig. 6c  zeigen schematische Darstellungen von Flächenbereichen erfindungsgemäßer Sicherheitselemente.

Fig. 7a und Fig. 7b  zeigen schematische Darstellungen eines weiteren erfindungsgemäßen Sicherheitselementes zur RF-Identifikation.

Fig. 8a  zeigt eine schematische Darstellung eines weiteren erfindungsgemäßen Sicherheitselementes zur RF-Identifikation.

Fig. 8b und Fig. 8c  zeigen Ersatzschaltbilder von RF-Bauteilen des Sicherheitselementes nach Fig. 8a.

Fig. 9a bis Fig. 9d  zeigen schematische Darstellungen weiterer erfindungsgemäßer Sicherheitselemente zur RF-Identifikation.

Fig. 1a zeigt ein Sicherheitselement zur RF-Identifikation 1, das von einer Substratschicht 11 und einer auf der Ober- und Unterseite der Substratschicht 11 aufgebrachten Schicht aus einem elektrisch leitfähigen Material gebildet wird.

Die Substratschicht 11 wird von einem dünnen elastischen Kunststoffmaterial, beispielsweise einer Dicke von 20 μm, gebildet. Die auf der Oberseite der Substratschicht 11 aufgebrachte leitfähige Schicht ist musterförmig ausgeformt, so daß sie eine RF-Antennenspule 12 und eine Platte eines kapazitiven Elements 13 bildet. Die auf der Unterseite der Substratschicht angebrachte leitfähige Schicht ist ebenfalls musterförmig zur Bildung eines RF-Bauteils ausgeformt und bildet im Bereich der Platte 13 ebenfalls eine Platte 14 aus, die zusammen mit der Platte 13 das kapazitive Element bildet.

Die Schichten aus einem elektrisch leitfähigen Material haben eine Dicke von 50 nm bis 50 μm. Die in Fig. 1a gezeigte musterförmige Form der leitfähigen Schicht wird durch einen Ätzprozess aus einer vollflächigen Metallschicht, durch Auftragen einer leitfähigen Paste oder eines dünnen Metalldrahtes erzeugt. Weiter wird in die auf der Oberfläche der Substratschicht 11 aufgebrachte leitfähige Schicht im Bereich der RF-Antennenspule eine Reliefstruktur zur Veränderung der elektrischen Parameter dieses RF-Bauteils abgeformt.

So ist die Reliefstruktur beispielsweise in einem Metalldraht abgeformt, der auf einer planaren Substratschicht fixiert ist. Die erzielbare Packungsdichte kann hierbei dadurch erhöht werden, daß nicht nur in der Ober- und Unterseite des Drahtes (in Bezug auf die Substratschicht) eine Reliefstruktur abgeformt ist, sondern daß auch in den Seitenflächen des Drahtes eine Reliefstruktur abgeformt ist. Die Reliefstrukturen benachbarter Drahtbahnen weisen hierbei bevorzugt ineinandergreifende Reliefstrukturformen auf, beispielsweise um eine halbe Periode gegeneinander phasenverschobene Rechteck-, Sinus- oder Dreieckstrukturen.

Durch die musterförmige Ausgestaltung der leitfähigen Schichten wird eine parallele Resonanzschaltung gebildet, deren Ersatzschaltbild in Fig. 1 b gezeigt ist:

Fig. 1 b zeigt eine elektrische Schaltung 14, die aus der Parallelschaltung eines Widerstandes R, einer Kapazität C und einer Induktivität L gebildet wird. Durch die von einer Lesevorrichtung abgestrahlten RF-Signale wird in der RF-Antennenspule 12 eine Spannung induziert, so daß an dem Schaltkreis eine Ausgangs-Spannung $V_0$ anliegt.

Fig. 1 c zeigt nun eine Darstellung einer Funktion 15, die die Ausgangsspannung $V_0$ in Abhängigkeit von der Frequenz des von der Lesevorrichtung abgestrahlten RF-Signals beschreibt.

Bei der Resonanzfrequenz $f_0$, mit

$$f_o = \frac{1}{2\pi\sqrt{LC}},$$

beträgt die Bandbreite B der Schaltung nach Fig. 1b

$$B = \frac{1}{2\pi \cdot R \cdot C}.$$

Damit beträgt der Qualitätsfaktor

$$Q = \frac{f_0}{B} = R \cdot \sqrt{\frac{C}{L}}.$$

Damit ergibt sich schließlich folgender Zusammenhang für die Spannung $V_0$ und damit für die induzierte Signalstärke:

$$V_0 = 2\pi \cdot f_0 \cdot N \cdot Q \cdot S \cdot B_0 \cdot \cos\alpha,$$

wobei $f_0$ die Resonanzfrequenz ist, N die Zahl der Windungen der RF-Antennenspule 12 ist, S die von der RF-Antennenspule 12 umschlossene Fläche ist, $B_0$ die Stärke des von dem RF-Lesegerät empfangenen Signals ist und $\alpha$ der Winkel zwischen dem Ausbreitungsvektor des empfangenen Signals und der von der RF-Antennenspule 12 aufgespannten Ebene ist.

Die Bandbreite des Resonators sollte mindestens doppelt so groß wie die Datenrate der Lesevorrichtung sein. Wird nun von einer typischen Datenrate von 70 KHz, einer Bandbreite von 150 Hz und einer Trägerfrequenz von 13,56 MHz ausgegangen, so beträgt der maximale Qualitätsfaktor Qmax = 13,56 MHz / 150 KHz = 96,86.

Je höher der Qualitätsfaktor ist, je größer ist das induzierte Signal und damit der Leseabstand zwischen Lesevorrichtung und Sicherheitselement 1, um so kleiner ist jedoch dann auch die Bandbreite und damit die verwertbare Datenrate. Das beste Ergebnis bringt nun ein Transponder, wenn sich der Qualitätsfaktor der Antennenschaltung in einem bestimmten, von der Trägerfrequenz und der Datenrate abhängigen Bereich befindet.

Für das oben beschriebene Ausführungsbeispiel mit einer Trägerfrequenz von 13,56 MHz und einer Datenrate von 70 KHz hat sich ein Qualitätsfaktor im Bereich von 40 bis 60 als bester Kompromiss zwischen induzierter Signalstärke und Bandbreite erwiesen. Dieser praktische ermittelte Faktor weicht von dem oben ermittelten maximalen Qualitätsfaktor Qmax ab, da die Bandbreite aufgrund von Fehltoleranzen der kapazitiven und induktiven Komponenten sowie Fehlanpassungen des Chips etwas höher als der theoretisch ermittelte Wert zu wählen ist.

Wie bereits oben dargestellt, hängt der Qualitätsfaktor Q von dem Widerstand R, der Kapazität C und der Induktivität L ab. Die Kapazität C und die Induktivität L ist durch die von der Lesevorrichtung verwendeten Trägefrequenz, die der Resonanzfrequenz entspricht, vorbestimmt. Zur Einstellung eines optimalen Qualitätsfaktors verbleibt damit im wesentlichen die Beeinflussung des Widerstands R. Durch die Erfindung wird nun ein zusätzlicher Parameter eingeführt, mittels dem der Widerstand R beeinflußt und damit der Transponder auf einen optimalen Betriebszustand eingestellt werden kann: Der Widerstand R ist nun nicht nur abhängig von der Dicke der elektrisch leitfähigen Schicht und der Formgebung der elektrisch leitfähigen Schicht, sondern weiter abhängig von der Reliefform, Relieftiefe und der Spatialfrequenz der in die elektrisch leitfähigen Schicht abgeformten Reliefstruktur.

Die Schichtdicke der elektrisch leitfähigen Schicht ist im Regelfall durch die Fertigungstechnologie vorgegeben und kann so üblicherweise nicht zur Feinabstimmung des Qualitätsfaktors verändert werden. Die Ausformung der elektrisch leitfähigen Schicht beeinflußt weiter auch die Signalstärke: So kann beispielsweise die Breite der die Antennenspule bildenden Leiterbahnen nicht beliebig variiert werden, da die Breite der Leiterbahnen weiter auch die von der Spule umschlossene Fläche beeinflußt, d. h. die Signalstärke bei gleicher zur Verfügung stehender Fläche um so geringer ist, je breiter die Leiterbahnen der Spule sind (siehe obige Formel).

Damit kann durch die Gestaltung der Reliefstruktur zum einen eine präzise Feineinstellung des Widerstandes R und damit ein für den jeweiligen Transponder optimaler Qualitätsfaktor erzielt werden. Werden die Rillen der Reliefstruktur im Bereich der RF-Antennenspule 12 weiter im Mittel mehr längs zur Flussrichtung des elektrischen Stromes als quer zur Flussrichtung des elektrischen Stromes orientiert, so ergibt sich bei konstanter Dicke der leitfähigen Schicht eine Verringerung des Widerstandes R, so daß sich bei konstanter für die RF-Antennenspule zur Verfügung stehenden Fläche und konstanter Dicke der elektrisch leitfähigen Schicht die Signalstärke verbessert (siehe obige Formel).

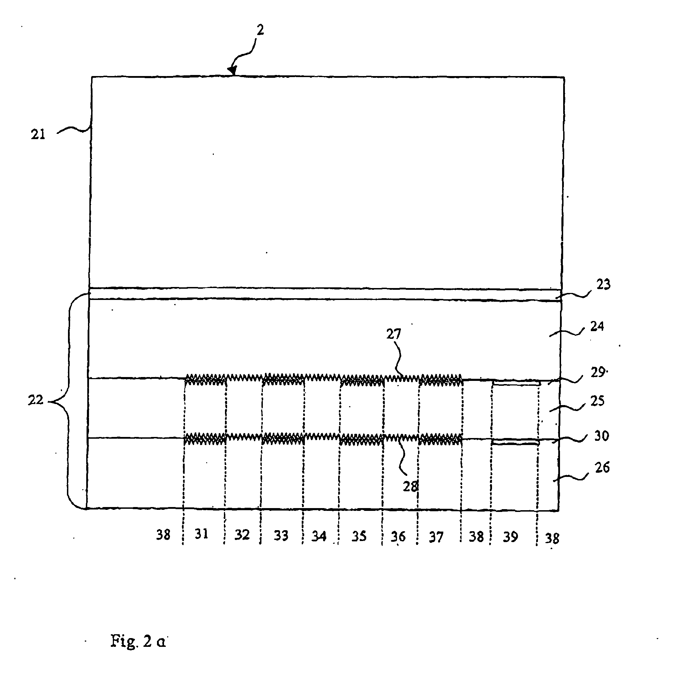

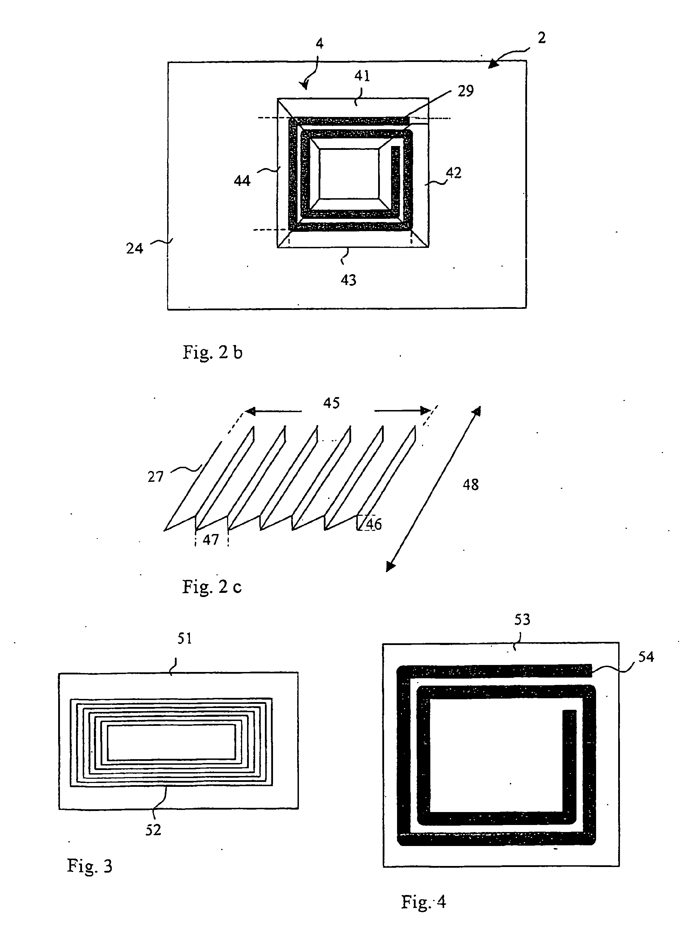

Anhand von Fig. 2a, Fig. 2b und Fig. 2c wird nun der Aufbau eines erfindungsgemäßen Sicherheitselementes detailliert erläutert.

Fig. 2a zeigt ein Sicherheitselement zur RF-Identifikation, das von einem Folienelement 2 gebildet wird. Bei dem Folienelement 2 handelt es sich um eine Prägefolie. Es ist jedoch auch möglich, daß es sich bei dem Folienelement 2 um eine Transfer-, Sticker- oder Laminierfolie handelt oder daß ein erfindungsgemäßes Sicherheitselement von der Übertragungslage einer Präge-, Transfer- oder Laminierfolie gebildet wird. Das Folienelement 2 weist eine Trägerfolie 21 und eine Übertragungslage 22 auf. Die Übertragungslage 22 weist eine Ablöse- und/oder Schutzlackschicht 23, zwei Replizierschichten 24 und 25, zwei elektrisch leitende Schichten 29 und 30 sowie eine Klebeschicht 26 auf. Die Trägerschicht 21 besteht beispielsweise aus einer Polyesterfolie mit einer Dicke von 12 $\mu$m bis 50 $\mu$m. Auf die Trägerfolie ist die Ablöse- und/oder Schutzlackschicht 23 in einer Schichtdicke von 0,3 bis 1,2 $\mu$m aufgebracht. Die Replizierschichten 24 und 25 haben eine Schichtdicke von 20 $\mu$m oder weniger.

Bei der Replizierschicht 24 handelt es sich vorzugsweise um ein transparentes, thermoplastisches Kunststoffmaterial, das beispielsweise mittels eines Druckverfahrens auf den von der Trägerfolie 21 und der Schutzlack- und/oder Ablöseschicht 24 gebildeten Folienkörper aufgebracht wird. Nach Trocknung wird in die Replizierschicht 24 mittels eines Prägewerkzeugs in den Bereichen 31 bis 37 eine Reliefstruktur 27 repliziert. Es ist hier jedoch auch möglich, daß die Replikation mittels eines UV-Replikationsverfahrens durchgeführt wird, bei dem ein UV-Replizierlack auf den von der Trägerfolie 21 und der Ablöse- und/oder Schutzlackschicht 23 gebildeten Folienkörper aufgetragen und anschließend zur Replikation der Reliefstruktur 27 partiell mit UV-Licht bestrahlt wird. Nach der Replikation der Reliefstruktur 27 erhärtet der Replizierlack durch Vernetzung oder in sonstiger Weise. Auf die Replizierschicht 24 wird nun die dünne, elektrisch leitende Schicht 29 vollflächig in einer Schichtdicke von 50 nm bis 50 $\mu$m, bevorzugt 1 $\mu$m bis 10 $\mu$m, aufgebracht, beispielsweise durch Aufdampfen bzw. durch Sputtern oder Drucken. Die elektrisch leitfähige Schicht besteht hierbei vorzugsweise aus einer Metallschicht, beispielsweise aus Kupfer, Aluminium, Gold, Silber oder Messing. Die leitfähige Schicht kann auch aus einer Legierung der vorgenannten Materialien oder aus einem sonstigen leitfähigen Material, beispielsweise aus einem leitfähigen Polymer, bestehen.

Anschließend wir die elektrisch leitfähige Schicht in den Bereichen 38, 32, 34 und 36 partiell demetallisiert, so daß sich beispielsweise in den Bereichen 31 bis 37 das in Fig. 2b gezeigte Leiterbahnenbild ergibt. Die Demetallisierung kann hierbei durch Aufdrucken eines Ätzresists und anschließendes Ätzen, durch Aufdrucken eines Ätzmittels oder durch Aufdrucken einer Waschmaske vor Beschichtung und einem Waschvorgang nach Beschichtung erfolgen. Weiter ist es natürlich auch möglich, durch entsprechend ausgeformte Bedampfungsmasken die Bedampfung bereits in der in Fig. 2a und Fig. 2b gezeigten Form partiell und musterförmig vorzunehmen. Weitere Verfahren sind die Belichtung von Photoresist mit folgendem Ätzen bzw. die Laserablation.

Anschließend wird die Replizierschicht 25 aufgebracht, in die dann, wie bereits oben in Bezug auf die Schichten 24 und 29 beschrieben, eine Reliefstruktur 28 repliziert wird und sodann die elektrisch leitfähige Schicht in partieller und musterförmiger Form, wie in Fig. 2a dargestellt, aufgebracht wird. Anschließend wird die Klebeschicht 26 aufgebracht. Bei der Klebeschicht 26 handelt es sich beispielsweise um einen thermisch aktivierbaren Kleber.

Auf die Replizierschicht 25 und die elektrisch leitfähige Schicht 30 könnte hier auch verzichtet werden. Weiter ist es natürlich auch möglich, daß der Folienkörper 2 noch weitere Schichten aufweist, die beispielsweise optisch erkennbare Sicherheitsmerkmale bereitstellen. So kann der Folienkörper beispielsweise noch ein Dünnfilmschichtsystem zur Erzeugung von blickwinkelabhängigen Farbverschiebungen mittels Interferenz aufweisen.

Fig. 2b zeigt nun einen Ausschnitt des Folienelements 2 mit einem Flächenbereich 4. In dem Flächenbereich 4 ist die elektrisch leitfähige Schicht 29 in Form einer planaren Spule mit zwei Windungen, wie in Fig. 2b dargestellt, ausgeformt.

Die Spule hat hier beispielsweise folgende Abmessungen: Die Länge der Spule beträgt 8 cm, die Breite der Spule 5 cm, die Breite der Windungen beträgt 2 mm, der Abstand der Windungen beträgt 2 mm, und die Dicke der elektrisch leitfähigen Schicht beträgt je nach Wahl der Reliefstruktur 27 zwischen 50 nm und 10 µm.

Um nun einen Qualitätsfaktor Q von 50 zu erzielen, ist ein Spulenwiderstand R zu wählen, für den gilt:

$$R = 50 \cdot \sqrt{\frac{L}{C}}$$

Damit ist eine Dicke te der elektrisch leitfähigen Schicht 29 zu wählen, für die folgende Bedingung gilt:

$$te = \frac{\rho \cdot l}{w \cdot F \cdot 50} \sqrt{\frac{C}{L}}$$

wobei ρ der spezifische Widerstand, I die Gesamtlänge der Leiterbahn der Spule, F der fraktale Faktor ist. Der fraktale Faktor F ist das Verhältnis der effektiven Breite zur projizierten Breite der Leiterbahnen der Spule.

Weiter ist hier auch noch der Skin-Effekt zu betrachten, der den Widerstand bei hohen Frequenzen verändert. Die Skin-Tiefe Ds wird hierbei durch die folgende Formel bestimmt:

$$Ds = \frac{1}{\sqrt{\pi \cdot f_0 \cdot \mu \cdot \sigma}}$$

wobei µ die Permeabilität des Materials und σ die elektrische Leitfähigkeit ist.

Bei Trägerfrequenzen im Bereich von 13,56 MHz und einer Dicke der elektrisch leitfähigen Schicht, die deutlich kleiner als 20 µm ist, ist der Skin-Effekt vernachlässigbar. Bei höheren Frequenzen, beispielsweise im 895 MHz oder 2,45 GHz Band, wirkt sich der Skin-Effekt hingegen auch bei Schichtdicken der elektrisch leitfähigen Schicht im Bereich von 1 µm bis 50 nm aus. Mit der Vergrößerung der Oberfläche, die durch die Reliefstruktur 27 erzielt wird, wird aufgrund des Skin-Effekts der Widerstand der Spule verringert.

Der Flächenbereich 4 weist vier Teilbereiche 41 bis 44 auf, in denen die Orientierung der Reliefstruktur 27 jeweils unterschiedlich ist. So sind die Rillen der Reliefstruktur 27 in den Teilbereichen 41 und 43 waagerecht und in den Teilbereichen 44 und 42 senkrecht orientiert. Hierdurch wird erreicht, daß die Rillen der Reliefstruktur 27 weitestgehend längs der Flussrichtung des elektrischen Stromes orientiert sind.

Als Profilform für die Reliefstruktur 27 wird die in Fig. 2c gezeigte Reliefstruktur verwendet.

Fig. 2c zeigt einen Ausschnitt einer Leiterbahn der Spule, die eine Breite 45 hat und in der die Reliefstruktur 27 abgeformt ist. Die Reliefstruktur 27 hat hierbei eine Gitterperiode 47 und eine Profiltiefe 46. Der fraktale Faktor F ergibt sich nun aus dem Verhältnis der effektiven Breite, die von der Gitterperiode 47 und der Relieftiefe 46 bestimmt wird, und der projizierten Breite, also der Breite 45. Für ein Sägezahnprofil berechnet sich der fraktale Faktor

$$F = h/d + \sqrt{\frac{h^2 + d^2}{d}} \,,$$

wobei h = die Höhe und d = die Periode ist.

Für die in Fig. 2c gezeigte sägezahnförmige Reliefstruktur ergibt sich somit bei einer Profiltiefe von 1 µm ein fraktaler Faktor von 1,62 bei einer Gitterperiode von 2 $\mu$m, ein fraktaler Faktor 2,41 bei einer Gitterperiode von 1 $\mu$m und ein fraktaler Faktor von-4,24 bei einer Gitterperiode von 0,5 $\mu$m.

Um nun bei der oben beschriebenen Spule einen Qualitätsfaktor von 100 zu erzielen, ist die Schichtdicke der elektrisch leitfähigen Schicht ohne Reliefstruktur 1,43 $\mu$m dick zu wählen, bei Verwendung einer Reliefstruktur mit einem fraktalen Faktor von 1,62 0,88 $\mu$m dick zu wählen, bei einem fraktalen Faktor von 2,41 0,59 $\mu$m dick zu wählen und bei einem fraktalen Faktor von 4,24 0,32 $\mu$m dick zu wählen. Wie hieraus ersichtlich ist, wird somit der Qualitätsfaktor und die zu wählende Schichtdicke der elektrisch leitfähigen Schicht 27 ganz wesentlich von der Reliefstruktur 27 beeinflußt.

Die Figuren Fig. 3 und Fig. 4 zeigen nun weitere Möglichkeiten auf, eine Reliefstruktur 27 in dem Flächenbereich 4 zu positionieren und auszuformen.

Fig. 3 zeigt einen Flächenbereich 51 und eine Reliefstruktur 52. Wie in Fig. 3 angedeutet, sind die Rillen der Reliefstruktur 52 in Form von konzentrischen Rechtecken angeordnet. In dem Bereich, in dem die Reliefstruktur 52 abgeformt ist, werden nun die Leiterbahnen der Spule vorgesehen, so daß die Reliefstruktur 52 nicht nur im Bereich der Leiterbahnen, sondern auch in den Zwischenräumen zwischen den Leiterbahnen vorgesehen ist. Dies hat den Vorteil, daß die Reliefstruktur 52 für verschiedene RF-Bauteile Verwendung finden kann, beispielsweise für Spulen mit unterschiedlicher Windungszahl Verwendung finden kann.

Fig. 4 zeigt nun einen Flächenbereich 53, in dessen Teilbereich 54 eine Reliefstruktur abgeformt ist. Die elektrisch leitfähige Schicht ist hierbei ebenfalls nur in den Teilbereichen 54 vorgesehen, so daß die Reliefstruktur die Bereiche, in der die elektrische leitfähige Schicht vorliegt, "nachzeichnet". In dem Teilbereich 54 sind hierbei die Rillen der Reliefstruktur jeweils in Flussrichtung des elektrischen Stromes orientiert und sind so stets in Längsrichtung der Leiterbahnen orientiert, die die Spule bilden.

Neben der in Fig. 2c gezeigten Reliefstruktur sind natürlich auch beliebige andere Reliefstrukturen als Reliefstruktur verwendbar. So sind beispielsweise Reliefstrukturen mit sinusförmigen, rechteckförmigen oder dreieckförmigen Profilformen verwendbar. Auch die Spatialfrequenz und die Profiltiefe kann variiert werden. Wie bereits oben aufgezeigt, sind hierbei vor allem Spatialfrequenzen zwischen 100 und 2000 Linien pro mm besonders gut geeignet, da hierdurch eine starke Beeinflussung des fraktalen Faktors erfolgt. Die Profiltiefe wird hierbei bevorzugt aus dem Bereich von 50 nm bis 10 $\mu$m gewählt.

Weiter ist es auch möglich, daß durch die Reliefstruktur 27 neben der oben aufgezeigten elektrischen Wirkung auch ein optischer Effekt erzielt wird, der beispielsweise als zusätzliches Sicherheitsmerkmal des Sicherheitselements 2 Verwendung finden kann. So ist es beispielsweise möglich, gezielt beugungsoptisch wirksame Strukturen, wie beispielsweise Hologramme, Beugungsgitter, Kineforms u. dgl., zu gestalten, die zum einen den oben beschriebenen elektrischen Effekt als auch eine optische Wirkung als zusätzliches optisches Sicherheitsmerkmal zeigen.

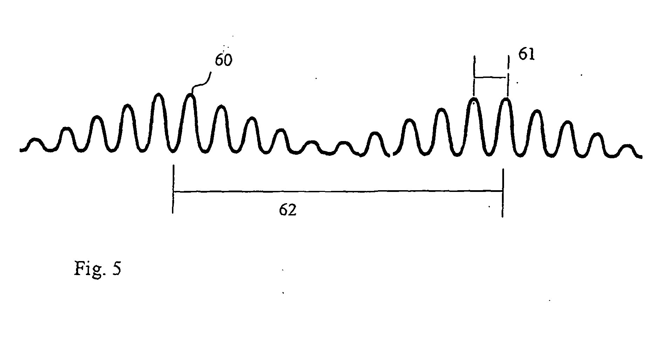

In Fig. 5 ist so beispielsweise eine Reliefform 60 gezeigt, die sich aus einer Überlagerung einer Grobstruktur mit einer Periode 62 und einer Feinstruktur mit einer Periode 61 ergibt. Die Feinstruktur kann hier beispielsweise primär zur Erzielung der oben beschriebenen elektrischen Effekte verwendet werden, wohingegen die Grobstruktur primär der Erzeugung eines bestimmten optischen Sicherheitsmerkmals dient. Durch eine derartige Kombination von Grobstruktur und Feinstruktur ist es dann möglich, die für die Erzielung des elektrischen Effekts zu wählende optimale Flächengestaltung von der für die Erzielung des optischen Sicherheitsmerkmals notwendigen optischen Flächengestaltung zu entkoppeln.

Auch die umgekehrte Möglichkeit besteht, d.h. die Grobstruktur dient primär der Erzeugung des optischen und die Feinstruktur dient primär zur Erzeugung des elektrischen Effekts.

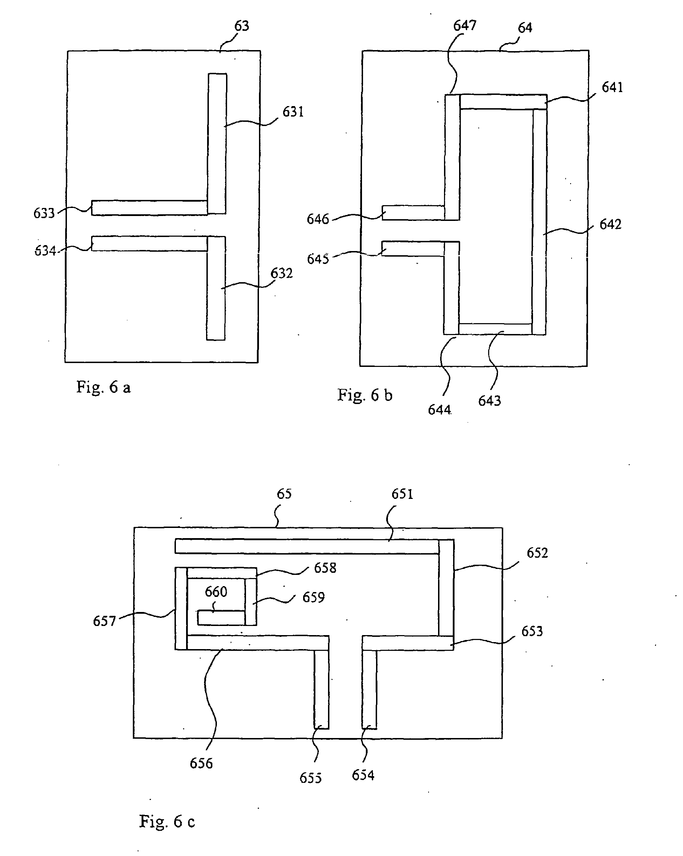

Die Figuren Fig. 6a bis Fig. 6c zeigen Flächenbereiche 63, 64 und 65, in denen eine elektrisch leitfähige Schicht jeweils zur Bildung einer RF-Antenne ausgeformt ist.

Der Flächenbereich 63 weist Teilflächen 631 bis 634 auf, in der jeweils eine elektrisch leitfähige Schicht auf einer Reliefstruktur aufgebracht ist. Diese Reliefstruktur ist in den Teilbereichen 631 und 632 in senkrechter Richtung orientiert und in den Teilbereichen 633 und 634 in waagerechter Richtung orientiert.

Der Flächenbereich 64 weist Teilflächen 641 bis 647 auf, in denen jeweils eine elektrisch leitfähige Schicht auf einer Reliefstruktur aufgebracht ist. Die Reliefstruktur ist hierbei in den Teilbereichen 642, 644 und 647 senkrecht und in den Teilbereichen 641, 643, 645 und 646 waagerecht orientiert.

Der Flächenbereich 65 weist in Teilbereichen 651 bis 660 eine auf einer Reliefstruktur aufgebrachte elektrisch leitfähige Schicht auf. Die Reliefstruktur ist in den Teilbereichen 652, 654, 655, 657 und 659 senkrecht und in den Teilbereichen 651, 653, 656, 658 und 660 waagerecht orientiert.

In Bezug auf die sonstige Ausformung der Reliefstrukturen wird auf die Figuren Fig. 2c, Fig. 3 und Fig. 4 verwiesen.

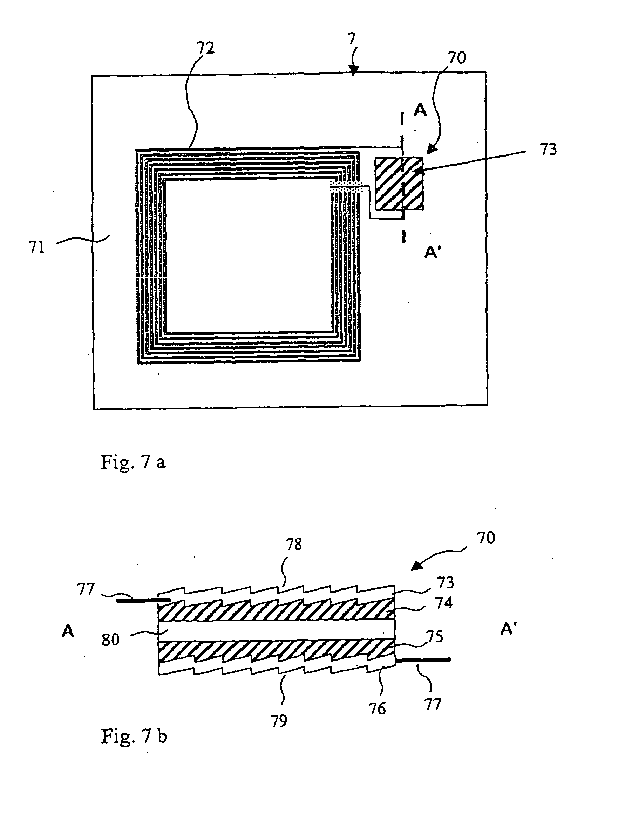

Fig. 7a zeigt ein Sicherheitselement 7 mit einer Substratschicht 71, einer RF-Antennenspule 72 und einem kapazitiven Element 70.

Die RF-Antennenspule 72 ist wie die RF-Antennenspule 12 nach Fig. 1a oder die Spule im Flächenbereich 4 nach Fig. 2b und Fig. 2c ausgestaltet. Der genaue Aufbau des kapazitiven Elements 70 ist in Fig. 7b gezeigt.

Fig. 7b zeigt einen Schnitt durch das kapazitive Element 70 und zeigt zwei elektrisch leitfähige Schichten 73 und 76, zwei Replizierschichten 74 und 75 und eine Trägerschicht 80. Die elektrisch leitfähigen Schichten 73 und 76 sowie die Replizierschichten 74 und 75 sind wie die elektrisch leitfähigen Schichten 29 und 30 bzw. die Replizierschichten 24 und 25 nach Fig. 2a ausgestaltet. Bei der Trägerschicht 80 handelt es sich beispielsweise um eine Polyesterfolie oder um eine Haftvermittlungsschicht. Auf die Schicht 80 könnte jedoch auch verzichtet werden. Die Kapazität 70 ist weiter über Verbindungselemente 77 mit der RF-Antennenspule 72 verbunden. Wie in Fig. 7b gezeigt, ist in den elektrisch leitfähigen Schichten 73 und 76 eine Reliefstruktur 78 bzw. 79 abgeformt.

Die Kapazität C des kapazitiven Elements 70 bestimmt sich auf $C = \dfrac{\kappa \varepsilon_0 A}{d_s}$, wobei $\kappa$ die Elektrizitätskonstante ist, $\varepsilon_0$ die Permeabilitätskonstante ist, A die Fläche der Kondensatorplatten ist und $d_s$ die Distanz zwischen den Kondensatorplatten ist. In diesem Ausführungsbeispiel beträgt $\kappa$ 2,1 bis 2,3, $\varepsilon_0$ ungefähr $8{,}9 \cdot 10^{-2}$ coul$^2$/N-m$^2$ und $d_s$ ungefähr 20 $\mu$m.

Auch hier ergibt sich durch die Reliefstrukturen 78 und 79 der anhand von Fig. 2c erläuterte Effekt einer Vergrößerung der effektiven Fläche, so daß auch hier in der obigen Formel die Fläche A mit dem fraktalen Faktor zu multiplizieren ist. Ist, wie in Fig. 7 gezeigt, beidseitig eine Reliefstruktur in der elektrisch leitfähigen Schicht abgeformt, so ist die Fläche A mit den fraktalen Faktoren beider Reliefstrukturen zu multiplizieren. Haben die Reliefstrukturen 78 und 79 beispielsweise eine Relieftiefe von 1 $\mu$m und eine Gitterperiode von 1 $\mu$m, so ist die Fläche mit dem fraktalen Faktor 2,41 x 2,41 = 5,81 zu multiplizieren.

Damit ist es möglich, durch die Reliefstrukturen 78 und 79 den Flächenbedarf des kapazitiven Elements erheblich zu reduzieren oder mittels einer gezielten Gestaltung der Reliefstrukturen 78 und 79 bei vorgegebener Fläche die Kapazität des kapazitiven Elements zur Abstimmung der Resonanzfrequenz zu justieren

$$( f_o = \frac{1}{2\pi\sqrt{LC}} ).$$

Auch hier ergibt sich, wie bereits oben beschrieben, die Möglichkeit, daß die Reliefstrukturen 78 und 79 nicht nur der Beeinflussung der elektrischen Eigenschaften des kapazitiven Elements 70 dienen, sondern auch optische Effekte erzeugen, die als optisches Sicherheitsmerkmal Verwendung finden.

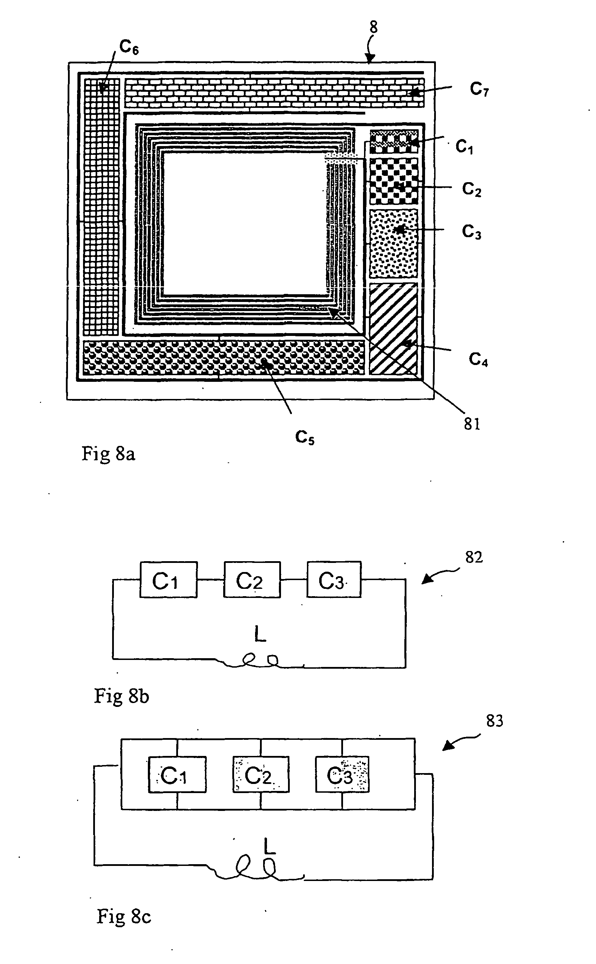

Fig. 8a zeigt nun ein weiteres Ausführungsbeispiel der Erfindung, bei dem die unter Fig. 1 a und Fig. 7a verdeutlichten Verfahren mit einer Gestaltung des kapazitiven Elements kombiniert werden, bei dem das kapazitive Element aus einer Vielzahl von über Verbindungsbahnen verbundenen kapazitiven Teilelementen gebildet ist. Fig. 8a zeigt so ein Sicherheitselement 8 mit einer RF-Antennenspule 81, mehrere Kapazitäten $C_1$ bis $C_7$ und mehreren Verbindungsbahnen, die die RF-Antennenspule 81 mit den Kapazitäten $C_1$ bis $C_6$ verbinden. Durch gezieltes Durchtrennen der Verbindungsbahnen ist es im späteren möglich, die Kapazität des kapazitiven Elements im Nachhinein zu verändern und damit die Resonanzfrequenz der RF-Resonatorschaltung zu verändern.

So ist es beispielsweise, wie in Fig. 8b gezeigt, möglich, durch gezieltes Durchtrennen von Verbindungsbahnen die Kapazitäten $C_1$ bis $C_3$ in einer Reihenschaltung mit der durch die RF-Antennenspule 81 gebildeten Induktivität L zu verschalten und damit eine Resonatorschaltung 82 zu erhalten. Weiter ist es möglich, wie in Fig. 8c gezeigt, durch gezieltes Durchtrennen der Verbindungsbahnen die Kapazitäten $C_1$ bis $C_3$ in eine Parallelschaltung zu verbinden. Hierdurch ergibt sich eine Resonanzschaltung 83, in der die Summe der Teilkapazitäten $C_1$ bis $C_3$ der Induktivität L der RF-Antennenspule 81 gegenübersteht.

Wie hieraus ersichtlich ist, lassen sich durch die gezielte Durchtrennung der Verbindungsbahnen im Nachhinein eine Vielzahl unterschiedlicher Kapazitätswerte erzielen, so daß eine personalisierte, einzigartige Resonanzfrequenz im Nachhinein in das Sicherheitselement 8 codiert werden kann. Die Durchtrennung der Verbindungswege erfolgt hier beispielsweise mittels eines Lasers.

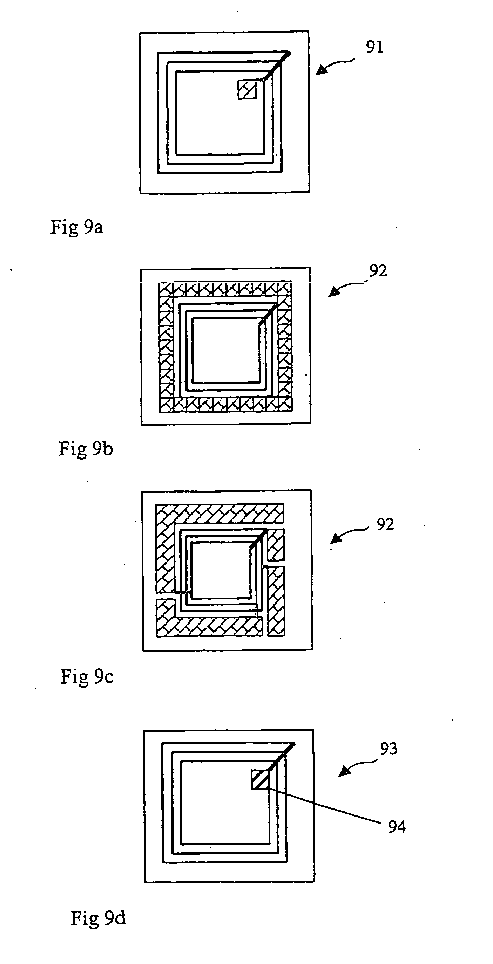

Anhand der Figuren Fig. 9a bis Fig. 9b werden nun weitere Möglichkeiten der Ausgestaltung eines erfindungsgemäßen Sicherheitselementes zur RF-Identifikation erläutert.

Fig. 9a zeigt ein Sicherheitselement 91. Dieses Sicherheitselement verfügt über eine Induktivität und eine Kapazität, die zu einem Resonanzschaltkreis verschaltet sind. Ein Mikrochip ist hier nicht vorgesehen. Ein derartiges Sicherheitselement dient beispielsweise der Diebstahlssicherung und reagiert auf eine ganz bestimmte Trägerfrequenz.

Fig. 9b zeigt ein Sicherheitselement 92, das über eine Induktivität und eine Kapazität verfügt. Die Kapazität ist mittels des in Fig. 8a beschriebenen Verfahrens individualisierbar, so daß dieses Sicherheitselement auf eine bestimmte, personalisierte Frequenz anspricht. Ein derartiges Sicherheitselement kann beispielsweise für Identifikation und Authentisierung eingesetzt werden.

Fig. 9c zeigt ein Sicherheitselement 92, bei dem eine Spule mit verschiedenen Kapazitäten derart verschaltet sind, daß sich verschiedene Resonanzschaltkreise ergeben und die Schaltung demnach zwei oder mehr Resonanzfrequenzen besitzt. Durch nachträgliche Entfernung einzelner Verbindungsbahnen ist die Codierung von Informationen durch Bestimmung der Resonanzfrequenzen möglich, die diese Schaltung besitzt. So sind beispielsweise bei der Verwendung von acht unterschiedlichen Resonanz-Frequenzen $2^8-1$ Möglichkeiten der Codierung möglich. Ein derartiges Sicherheitselement kann zur Identifizierung und Authentifizierung verwendet werden.

Fig. 9d zeigt ein Sicherheitselement 93, das über eine Antenne und einen Mikrochip 94 verfügt. Die Kommunikation zwischen Transponder und Leseeinrichtung kann in der Übermittlung einer einfachen ID-Kennung oder in einem Prozeß bestehen, bei dem in dem Transponder gespeicherte Daten identifiziert und neu gespeichert werden. Ein derartiges Element kann Daten lesen und Schreiben und mit einer Lesevorrichtung kommunizieren, so daß hier komplexe Funktionen, insbesondere komplexe Identifikations-, Authentisierungs-, E-Commerce- und E-Government-Funktionen realisiert werden können.

**Patentansprüche**

**1.** Sicherheitselement (1, 2, 7, 8) zur RF-Identifikation, wobei das Sicherheitselement eine flexible, elektrisch nicht leitende Substratschicht (11, 24) und eine auf der Substratschicht aufgebrachte erste elektrisch leitfähige Schicht (29) aus einem elektrisch leitenden Material aufweist, die in einem ersten Flächenbereich (4, 51, 53, 63, 64, 65) musterförmig zur Bildung eines RF-Bauteils (12, 72, 81) ausgeformt ist, wobei in dem, dem RF-Bauteil zugeordneten Flächenbereich in der ersten elektrisch leitfähigen Schicht (29) zumindest bereichsweise eine erste Reliefstruktur (27, 28, 60) mit Rillen zur Änderung von elektrischen Eigenschaften des RF-Bauteils abgeformt ist,
**dadurch gekennzeichnet,**
**daß** die erste elektrisch leitfähige Schicht (29) im ersten Flächenbereich (2, 51, 53, 63, 64, 65) in Form einer RF-Antenne (12) oder einer Spule ausgeformt ist, daß in dem der RF-Antenne (12) bzw. der Spule zugeordneten Bereich der leitfähigen Schicht (29) die Rillen der Reliefstruktur (27, 28, 60) im Mittel mehr längs zur Flussrichtung des elektrischen Stroms als quer zur Flussrichtung des elektrischen Stroms orientiert sind, und dass die Reliefstruktur (27, 28, 60) eine Profiltiefe im Bereich von 50nm bis 10μm und eine Spatialfrequenz im Bereich von 100 bis 2000 Linien pro mm aufweist, wobei die Rillen der Reliefstruktur (27, 28, 60) sowohl in der, der Substratschicht (11, 24) zugewandten Oberfläche als auch der, der Substratschicht (11, 24) abgewandten Oberfläche der ersten elektrisch leitenden Schicht (29) ausgebildet sind.

**2.** Sicherheitselement nach Anspruch 1,
**dadurch gekennzeichnet,**
**daß** die Substratschicht (24) eine Replizierschicht ist und die erste Reliefstruktur (27) in die der ersten elektrisch leitfähigen Schicht zugewandte Oberfläche der Replizierschicht (24) abgeformt ist.

**3.** Sicherheitselement nach einem der vorhergehenden Ansprüche,
**dadurch gekennzeichnet,**
**daß** die erste elektrisch leitfähige Schicht (29) eine auf die Substratschicht (24) aufgebrachte Metallschicht ist.

**4.** Sicherheitselement nach einem der vorgehenden Ansprüche,
**dadurch gekennzeichnet,**
**daß** die erste elektrisch leitfähige Schicht (29) eine Dicke im Bereich von 50 nm bis 50 μm, bevorzugt von 1 bis 10 μm, hat.

**5.** Sicherheitselement nach Anspruch 1,
**dadurch gekennzeichnet,**
**daß** die Rillen der Reliefstruktur (27) in dem der RF-Antenne bzw. -Spule zugeordneten Bereich der elektrisch leitfähigen Schicht längs der Flussrichtung des elektrischen Stroms orientiert sind.

**6.** Sicherheitselement nach einem der Ansprüche 1 bis 5,
**dadurch gekennzeichnet,**
**daß** die erste elektrisch leitfähige Schicht (29) in dem ersten Flächenbereich (2) in Form ein oder mehrerer Leiterbahnen mit einer Breite von 50 μm bis 10 mm, vorzugsweise 100 μm, ausgeformt ist.

**7.** Sicherheitselement nach einem der vorgehenden Ansprüche,
**dadurch gekennzeichnet,**

**daß** das Sicherheitselement eine zweite elektrisch leitfähige Schicht (76) aufweist und daß im ersten Flächenbereich die erste und die zweite elektrisch leitfähige Schicht (73, 76) ein kapazitives Element (70) bilden.

8. Sicherheitselement nach Anspruch 7,
   **dadurch gekennzeichnet,**
   **daß** in dem dem kapazitiven Element (70) zugeordneten Flächenbereich in der zweiten leitfähigen Schicht (76) zumindest bereichsweise eine zweite Reliefstruktur (79) abgeformt ist.

9. Sicherheitselement nach Anspruch 7 oder 8,
   **dadurch gekennzeichnet,**
   **daß** die erste Reliefstruktur (78) eine Vielzahl von sich kreuzenden Rillen aufweist.

10. Sicherheitselement nach einem der vorgehenden Ansprüche,
    **dadurch gekennzeichnet,**
    **daß** die erste Reliefstruktur (27) ein Sägezahn-, Dreieck-, Rechteck- oder Sinusprofil besitzt.

11. Optisches Sicherheitselement nach einem der vorgehenden Ansprüche,
    **dadurch gekennzeichnet,**
    **daß** die erste Reliefstruktur (60) aus der Überlagerung einer Grobstruktur und einer Feinstruktur gebildet ist.

12. Sicherheitselement nach einem der vorgehenden Ansprüche,
    **dadurch gekennzeichnet,**
    **daß** die erste Reliefstruktur zusätzlich ein optisches Sicherheitsmerkmal erzeugt.

13. Sicherheitselement nach einem der vorgehenden Ansprüche,
    **dadurch gekennzeichnet,**
    **daß** das Sicherheitselement eine Resonanzschaltung zur RF-Identifikation aufweist.

14. Sicherheitselement nach einem der vorgehenden Ansprüche,
    **dadurch gekennzeichnet,**
    **daß** das Sicherheitselement einen Chip aufweist.

15. Sicherheitselement nach einem der vorgehenden Ansprüche,
    **dadurch gekennzeichnet,**
    **daß** das Sicherheitselement ein Folienelement, insbesondere eine Prägefolie, eine Laminierfolie, eine Stickerfolie oder ein Teilelement einer Übertragungslage einer derartigen Folie ist.

16. Verfahren zum Erzeugen eines Sicherheitselements zur RF-Identifikation, wobei bei dem Verfahren auf einer flexiblen, elektrisch nicht leitenden Substratschicht (24) in einem ersten Flächenbereich der Substratschicht eine erste leitfähige Schicht (29) aus einem elektrisch leitenden Material musterförmig zur Bildung eines RF-Bauteils (12) ausgeformt aufgebracht wird, wobei in dem, dem RF-Bauteil zugeordneten Flächenbereich (2) in der ersten leitfähigen Schicht (29) zumindest bereichsweise eine erste Reliefstruktur (27) mit Rillen zur Änderung von elektrischen Eigenschaften des -RF-Bauteils abgeformt wird, wobei die erste elektrisch leitfähige Schicht (29) im ersten Flächenbereich in Form einer RF-Antenne (12) oder einer Spule ausgeformt wird, wobei in dem der RF-Antenne (12) bzw. der Spule zugeordneten Bereich der leitfähigen Schicht (29) die Rillen der Reliefstruktur (27, 28, 60) im Mittel mehr längs zur Flussrichtung des elektrischen Stroms als quer zur Flussrichtung des elektrischen Stroms orientiert werden, und wobei die Reliefstruktur (27, 28, 60) mit einer Profiltiefe im Bereich von 50nm bis 10$\mu$m und einer Spatialfrequenz im Bereich von 100 bis 2000 Linien pro mm ausgebildet wird, wobei die Rillen der Reliefstruktur (27, 28, 60) sowohl in der, der Substratschicht (11, 24) zugewandten Oberfläche als auch der, der Substratschicht (11, 24) abgewandten Oberfläche der ersten elektrisch leitenden Schicht (29) ausgebildet werden.

17. Verfahren nach Anspruch 16,
    **dadurch gekennzeichnet,**
    **daß** die erste leitfähige Schicht (29) vollflächig, insbesondere durch Bedampfung, auf die Substratschicht aufgebracht wird und dann partiell musterförmig zur Bildung des RF-Bauteils (12) demetallisiert wird.

18. Verfahren nach Anspruch 16 oder 17,
    **dadurch gekennzeichnet,**

**daß** in der ersten leitfähigen Schicht zwei oder mehr mit Verbindungsbahnen verbundene kapazitive Teil-Elemente ausgeformt werden und daß Verbindungsbahnen zu kapazitiven Teil-Elementen später zur Feinabstimmung der Resonanzfrequenz durchtrennt werden.

**Claims**

1. Security element (1, 2, 7, 8) for RF identification, wherein the security element has a flexible electrically non-conducting substrate layer (11, 24) and a first electrically conductive layer (29), made of an electrically conducting material, which is applied to the substrate layer and is formed in a first area region (4, 51, 53, 63, 64, 65) in the form of a pattern in order to produce an RF component (12, 72, 81), wherein a first relief structure (27, 28, 60) with grooves is formed, at least in regions, in the area region assigned to the RF component in the first electrically conductive layer (29) in order to change the electric characteristics of the RF component, **characterized in that** the first electrically conductive layer (29) is formed in the first area region (2, 51, 53, 63, 64, 65) in the form of an RF antenna (12) or a coil, **in that** the grooves of the relief structure (27, 28, 60) are oriented, on average, along the flow direction of the electric current rather than transversely with respect to the flow direction of the electric current in the region of the conductive layer (29) that is assigned to the RF antenna (12) or coil, and **in that** the relief structure (27, 28, 60) has a profile depth in the range from 50 nm to 10 $\mu$m and a spatial frequency in the range from 100 to 2000 lines per mm, wherein the grooves of the relief structure (27, 28, 60) are formed both in the surface of the first electrically conducting layer (29) that is facing the substrate layer (11, 24) and in the surface of the first electrically conducting layer (29) that is facing away from the substrate layer (11, 24).

2. Security element according to Claim 1, **characterized in that** the substrate layer (24) is a replication layer and the first relief structure (27) is formed into the surface of the replication layer (24) that is facing the first electrically conductive layer.

3. Security element according to one of the preceding claims, **characterized in that** the first electrically conductive layer (29) is a metal layer which has been applied to the substrate layer (24).

4. Security element according to one of the preceding claims, **characterized in that** the first electrically conductive layer (29) has a thickness in the range from 50 nm to 50 $\mu$m, preferably from 1 to 10 $\mu$m.

5. Security element according to Claim 1, **characterized in that** the grooves of the relief structure (27) in the region of the electrically conductive layer that is assigned to the RF antenna or coil are oriented along the flow direction of the electric current.

6. Security element according to one of Claims 1 to 5, **characterized in that** the first electrically conductive layer (29) is formed in the first area region (2) in the form of one or more conductor tracks having a width of from 50 $\mu$m to 10 mm, preferably 100 $\mu$m.

7. Security element according to one of the preceding claims, **characterized in that** the security element has a second electrically conductive layer (76) and **in that**, in the first area region, the first and the second electrically conductive layers (73, 76) form a capacitive element (70).

8. Security element according to Claim 7, **characterized in that** a second relief structure (79) is formed, at least in regions, in the area region assigned to the capacitive element (70) in the second conductive layer (76).

9. Security element according to Claim 7 or 8, **characterized in that** the first relief structure (78) has a multiplicity of intersecting grooves.

10. Security element according to one of the preceding claims, **characterized in that** the first relief structure (27) has a sawtooth, triangular, rectangular or sinusoidal profile.

11. Optical security element according to one of the preceding claims, **characterized in that** the first relief structure (60) is formed by the superposition of a coarse structure and a fine structure.

12. Security element according to one of the preceding claims, **characterized in that** the first relief structure additionally produces an optical security feature.

**13.** Security element according to one of the preceding claims, **characterized in that** the security element has a resonant circuit for RF identification.

**14.** Security element according to one of the preceding claims, **characterized in that** the security element has a chip.

**15.** Security element according to one of the preceding claims, **characterized in that** the security element is a film element, in particular an embossing film, a laminating film, a sticker film or a partial element of a transfer layer of such a film.

**16.** Method for producing a security element for RF identification, in which method a first conductive layer (29) made of an electrically conducting material is formed and applied in the form of a pattern to a flexible electrically non-conducting substrate layer (24) in a first area region of the substrate layer in order to produce an RF component (12), wherein a first relief structure (27) with grooves is formed, at least in regions, in the area region (2) assigned to the RF component in the first conductive layer (29) in order to change electric characteristics of the RF component, wherein the first electrically conductive layer (29) is formed in the first area region in the form of an RF antenna (12) or a coil, wherein the grooves of the relief structure (27, 28, 60) are oriented, on average, along the flow direction of the electric current rather than transversely with respect to the flow direction of the electric current in the region of the conductive layer (29) that is assigned to the RF antenna (12) or coil, and wherein the relief structure (27, 28, 60) is formed with a profile depth in the range from 50 nm to 10 $\mu$m and a spatial frequency in the range from 100 to 2000 lines per mm, wherein the grooves of the relief structure (27, 28, 60) are formed both in the surface of the first electrically conducting layer (29) that is facing the substrate layer (11, 24) and in the surface of the first electrically conducting layer (29) that is facing away from the substrate layer (11, 24).

**17.** Method according to Claim 16, **characterized in that** the first conductive layer (29) is applied to the substrate layer over the whole area, in particular by means of vapour deposition, and is then demetallized partially in the form of a pattern in order to form the RF component (12).

**18.** Method according to Claim 16 or 17, **characterized in that** two or more capacitive partial elements connected to connecting tracks are formed in the first conductive layer and **in that** connecting tracks leading to capacitive partial elements are severed later in order to fine-tune the resonant frequency.

**Revendications**

**1.** Elément de sécurité (1, 2, 7, 8) pour l'identification par radiofréquence, l'élément de sécurité présentant une couche de substrat flexible non conductrice électriquement (11, 24) et une première couche conductrice de électriquement (29) déposée sur la couche de substrat en un matériau conducteur électriquement, qui est formée dans une première zone de surface (4, 51, 53, 63, 64, 65) en forme de motifs pour la formation d'un composant radiofréquence (12, 72, 81), une première structure en relief (27, 28, 60) présentant des rainures pour la modification des propriétés électriques du composant radiofréquence étant moulée au moins partiellement dans la zone de surface affectée au composant radiofréquence dans la première couche conductrice électriquement (29),
**caractérisé en ce que**
la première couche conductrice électriquement (29) est formée dans la première zone de surface (2, 51, 53, 63, 64, 65) sous la forme d'une antenne radiofréquence (12) ou d'une bobine, **en ce que** dans la zone affectée à l'antenne radiofréquence (12) et/ou à la bobine de la couche conductrice (29), les rainures de la structure en relief (27, 28, 60) au milieu sont orientées plus le long du sens direct du courant électrique que de manière transversale par rapport au sens direct du courant électrique, et **en ce que** la structure en relief (27, 28, 60) présente une profondeur de profilé comprise entre 50 nm et 10 $\mu$m et une fréquence spatiale comprise entre 100 et 2000 lignes par mm, les rainures de la structure en relief (27, 28, 60) étant réalisées aussi bien dans la surface tournée vers la couche de substrat (11, 24) que dans la surface faisant face à la couche de substrat (11, 24) de la première couche conductrice électriquement (29).

**2.** Elément de sécurité selon la revendication 1,
**caractérisé en ce que**
la couche de substrat (24) est une couche de réplication et **en ce que** la première structure en relief (27) est moulée dans la surface tournée vers la première couche conductrice électriquement de la couche de réplication (24).

**3.** Elément de sécurité selon l'une quelconque des revendications précédentes,

**caractérisé en ce que**
la première couche conductrice électriquement (29) est une couche métallique déposée sur la couche de substrat (24).

4. Elément de sécurité selon l'une quelconque des revendications précédentes,
**caractérisé en ce que**
la première couche conductrice électriquement (29) a une épaisseur comprise entre 50 nm et 50 $\mu$m, de préférence entre 1 et 10 $\mu$m.

5. Elément de sécurité selon la revendication 1,
**caractérisé en ce**
**que** les rainures de la structure en relief (27) dans la zone affectée à l'antenne radiofréquence et/ou à la bobine de la couche conductrice électriquement sont orientées le long du sens direct du courant électrique.

6. Elément de sécurité selon l'une quelconque des revendications 1 à 5,
**caractérisé en ce**
**que** la première couche conductrice électriquement (29) dans la première zone de surface (2) est formée sous la forme d'une ou de plusieurs pistes conductrices d'une largeur comprise entre 50 $\mu$m et 10 mm, de préférence de 100 $\mu$m.

7. Elément de sécurité selon l'une quelconque des revendications précédentes,
**caractérisé en ce**
**que** l'élément de sécurité présente une seconde couche conductrice électriquement (76), et en ce que dans la première zone de surface, la première et la seconde couches conductrices électriquement (73, 76) forment un élément capacitif (70).

8. Elément de sécurité selon la revendication 7,
**caractérisé en ce**
**que** dans la zone de surface affectée à l'élément capacitif (70) dans la seconde couche conductrice électriquement (76) une seconde structure en relief (79) est moulée au moins partiellement.

9. Elément de sécurité selon la revendication 7 ou 8,
**caractérisé en ce**
**que** la première structure en relief (78) présente une pluralité de rainures s'entrecroisant.

10. Elément de sécurité selon l'une quelconque des revendications précédentes,
**caractérisé en ce**
**que** la première structure en relief (27) a un profil en dents de scie, triangulaire, rectangulaire ou sinusoïdal.

11. Elément de sécurité optique selon l'une quelconque des revendications précédentes,
**caractérisé en ce**
**que** la première structure en relief (60) est formée à partir de la superposition d'une structure de base et d'une structure fine.

12. Elément de sécurité selon l'une quelconque des revendications précédentes,
**caractérisé en ce**
**que** la première structure en relief produit en outre une caractéristique de sécurité optique.

13. Elément de sécurité selon l'une quelconque des revendications précédentes,
**caractérisé en ce**
**que** l'élément de sécurité présente un circuit de résonance pour l'identification par radiofréquence.

14. Elément de sécurité selon l'une quelconque des revendications précédentes,
**caractérisé en ce**
**que** l'élément de sécurité comprend une puce.

15. Elément de sécurité selon l'une quelconque des revendications précédentes,
**caractérisé en ce**

**que** l'élément de sécurité est un élément de feuilles, notamment une feuille à marquer, une feuille à laminer, une feuille adhésive ou un élément partiel d'une couche de transfert d'une feuille de ce type.

16. Procédé pour la production d'un élément de sécurité pour l'identification par radiofréquence, une première couche conductrice (29) en un matériau conducteur électriquement étant déposée, dans le cas du procédé, en forme de motifs pour former un composant radiofréquence (12)sur une couche de substrat flexible non conductrice électriquement (24) dans une première zone de surface de la couche de substrat, dans la zone de surface (2) affectée au composant radiofréquence dans la première couche conductrice (29) une première structure en relief (27) présentant des rainures étant moulée au moins partiellement pour modifier les propriétés électriques du composant radiofréquence, la première couche conductrice électriquement (29) étant formée dans la première zone de surface sous la forme d'une antenne radiofréquence (12) et/ou d'une bobine, les rainures de la structure en relief (27, 28, 60) étant orientées, dans la zone affectée à l'antenne radiofréquence (12) et/ou à la bobine de la couche conductrice (29), au milieu davantage le long du sens direct du courant électrique que de manière transversale par rapport au sens direct du courant électrique, et la structure en relief (27, 28, 60) étant réalisée avec une profondeur de profilé comprise entre 50 nm et 10 $\mu$m et avec une fréquence spatiale comprise entre 100 et 2000 lignes par mm, les rainures de la structure en relief (27, 28, 60) étant réalisées aussi bien dans la surface tournée vers la couche de substrat (11, 24) que dans la surface faisant face à la couche de substrat (11, 24) de la première couche conductrice électriquement (29).

17. Procédé selon la revendication 16,
**caractérisé en ce**
**que** la première couche conductrice (29) est appliquée sur toute sa surface sur la couche de substrat, notamment par estompage, puis est partiellement dématérialisée en forme de motifs pour la formation du composant radiofréquence (12).

18. Procédé selon la revendication 16 ou 17,
**caractérisé en ce**
**que** dans la première couche conductrice deux éléments partiels capacitifs ou plus connectés à des pistes de jonction sont formés, et en ce que par la suite, les pistes de jonction sont divisées en éléments partiels capacitifs pour le réglage précis de la fréquence de résonance.

Fig. 1a

Fig. 1b

Fig. 1c

Fig. 2 a

Fig. 2 b

Fig. 2 c

Fig. 3

Fig. 4

Fig. 5

63

631

633

634

632

Fig. 6 a

647    64

641

646

645

642

Fig. 6 b

644    643

65    651

658

660    659

657

652

656    653

655    654

Fig. 6 c

Fig. 7 a

Fig. 7 b

Fig 8a

Fig 8b

Fig 8c

Fig 9a

Fig 9b

Fig 9c

Fig 9d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4220956 A
- US 5528222 A
- WO 9721184 A